# EUROPÄISCHE PATENTANMELDUNG

(11) **EP 1 060 700 A1**
(43) Veröffentlichungstag der Anmeldung: **20.12.2000**
(21) Anmeldenummer: 00112511.1
(22) Anmeldetag: 13.06.2000
(51) Int. Cl.: A47J 31/54

(54) **Durchflussheizung und Kaffeemaschine mit einer solchen**

(30) Priorität: 14.06.1999 DE 19927057
(71) Anmelder: Barnikol, Eberhard, 96515 Sonneberg (DE); Bauersachs, Jürgen, 96525 Neuhaus-Schierschnitz (DE)
(72) Erfinder: Barnikol, Eberhard, 96515 Sonneberg (DE); Bauersachs, Jürgen, 96525 Neuhaus-Schierschnitz (DE)
(74) Vertreter: Engel, Christoph Klaus

(57) **Zusammenfassung**

Die Erfindung betrifft eine Durchflußheizung zur Erwärmung flüssiger Medien mit einem elektrischen Widerstandsheizelement (16) und einem Durchflußrohr (1), welches vom Medium durchströmt wird und aus einem wärmebeständigen, zumindest an seiner Innenwand gegenüber dem Medium resistenten Material oder einer entsprechenden Materialkombination besteht.
In Weiterbildung solcher Durchflußheizungen ist das Widerstandsheizelement (16) erfindungsgemäß direkt an der Außenwand des Durchflußrohrs (1) angeordnet, welche aus elektrisch isolierendem Material, vorzugsweise Glas, Kunstglas oder einem anderen Kunststoff besteht. Bei einer zweckmäßigen Ausführung ist eine an die Form des Durchflußrohrs (1) angepaßte Keramikfassung (4) vorgesehen, die das Durchflußrohr und das Widerstandsheizelement (16) umkapselt.
Derartige Durchflußheizungen können insbesondere bei Kaffeemaschine angewendet werden.

## Beschreibung

Die vorliegende Erfindung betrifft eine Durchflußheizung zur Erwärmung flüssiger Medien mit einem elektrischen Widerstandsheizelement und einem Durchflußrohr, welches vom Medium durchströmt wird und aus einem wärmebeständigen, zumindest an seiner Innenwand gegenüber dem Medium resistenten Material oder einer entsprechenden Materialkombination besteht. Außerdem betrifft die vorliegende Erfindung eine Heißgetränkezubereitungsmaschine, wie eine Kaffeemaschine, mit einer Durchflußheizung zur Erwärmung des Wassers und einer Warmhalteplatte für die Wärmezufuhr zu dem Behälter, in dem der zubereitete Kaffee aufbewahrt wird.

Aus der DE 29 48 591 C2 ist ein Durchlauferhitzer bekannt, der auch in Kaffeemaschinen eingesetzt werden kann. Als Heizelement wird ein PTC-Element benutzt. Solche PTC-Elemente sind relativ teuer und haben einen schwierigen Herstellungsprozeß zur Folge.

Die DE-AS 24 54 920 zeigt einen elektrischen Durchlauferhitzer, der als Heizelement einen Widerstandsdraht verwendet, welcher parallel zu einem metallischen Durchflußrohr verläuft. Bei einem solchen Aufbau muß zwischen dem Heizelement und dem Durchflußrohr eine zusätzliche Isolationsschicht vorhanden sein, um einen elektrischen Kontakt zu vermeiden. Dadurch wird der Wärmeübergang stark behindert, was zu einem schlechten Wirkungsgrad des Durchlauferhitzers führt.

Bei nahezu allen bekannten Kaffeemaschinen, die in sehr vielen Haushalten verwendet werden, wird zur Erhitzung des Wassers eine Durchflußheizung der oben genannten Art verwendet. Das Durchflußrohr besteht aus Metall und steht nur in einem kleinen Umfangsabschnitt in Wärmekontakt mit dem Durchflußrohr. Einerseits hat die den Nachteil, daß der Wärmeübergangswiderstand zwischen dem Heizelement und dem Durchflußrohr groß und damit der Wirkungsgrad dieser Durchflußheizung schlecht ist. Andererseits muß das Wasser in dem Durchflußrohr auf einer kurzen Strecke stark erwärmt werden, um in dem sich an das Durchflußrohr anschließenden Kanal aufzusteigen und dann mit ausreichend hoher Temperatur auf das in dem Filter befindliche Kaffeepulver aufzutreffen. Die erforderliche Temperatur des Wassers liegt im Durchflußrohr jedenfalls oberhalb des Ausfällungspunktes, an welchem insbesondere der im Wasser enthaltene Kalkanteil ausgefällt wird, so daß die Gefahr besteht, daß das Durchflußrohr von abgelagertem Kalk zugesetzt wird. Dies kann zur Zerstörung der Durchflußheizung führen und macht einen hohen Wartungs- und Pflegeaufwand durch regelmäßige Entkalkungsvorgänge erforderlich. Im übrigen verschlechtert der abgelagerte Kalk nochmals den Wärmeübergang, so daß der Wirkungsgrad der Durchflußheizung weiter sinkt. Bei fortgeschrittener Kalkablagerung verringert sich die Endtemperatur des Wassers soweit, daß der zubereitete Kaffee deutlich an Aroma verliert.

Eine Aufgabe der vorliegenden Erfindung besteht daher in der Bereitstellung einer Durchflußheizung, bei welcher die Gefahr einer Beaufschlagung des durchströmenden flüssigen Mediums mit einem Spannungspotential vermieden wird. Eine besondere Aufgabe der vorliegenden Erfindung besteht in der Bereitstellung einer Durchflußheizung für eine Kaffeemaschine, die einen hohen Wirkungsgrad aufweist und eine verbesserte Gestaltung des Durchflußrohrs ermöglicht, wodurch die Gefahr von Kalkablagerungen reduziert wird. Insbesondere hat die vorliegende Erfindung auch die Aufgabe, eine Kaffeemaschine mit einer derartigen Durchflußheizung bereitzustellen.

Diese und weitere Aufgaben werden von der erfindungsgemäßen Durchflußheizung gelöst, bei der das Widerstandsheizelement direkt an der Außenwand des Durchflußrohrs angeordnet ist, welche aus elektrisch isolierendem Material besteht.

Dies bietet den Vorteil, daß einerseits ein guter Wärmekontakt zwischen dem Heizelement und dem Durchflußrohr sichergestellt ist, andererseits eine elektrische Kontaktierung des Heizelements mit dem flüssigen Medium vermieden wird. Dies führt zu sicherem Betrieb und Energieeinsparung.

Bei einer bevorzugten Ausführungsform ist eine an die Form des Durchflußrohres angepaßte Keramikfassung vorgesehen, die das Durchflußrohr und das Heizelement umkapselt. Durch die Verwendung der Keramikfassung ist sichergestellt, daß die vom Heizelement bereitgestellte Wärme gegenüber der Umgebung gut abgeschirmt wird, so daß der Großteil der Wärme an das Durchflußrohr abgegeben werden kann. Durch geeignete Materialauswahl für die Keramikfassung kann deren Wärmewiderstand auf den jeweiligen Einsatzfall eingestellt werden. Ein weiterer Vorteil der Durchflußheizung besteht in den sehr geringen Herstellungskosten, da alle verwendeten Materialien preiswert sind und der technologische Ablauf leicht zu beherrschen ist.

Die erfindungsgemäße Durchflußheizung und deren vorteilhafte Ausführungsformen lassen sich besonders zweckmäßig in einer Kaffeemaschine oder ähnlichen Heißgetränkezubereitungsmaschinen einsetzen. Aufgrund der preiswerten Herstellungsmöglichkeit verteuert die erfindungsgemäße Durchflußheizung bekannte Kaffeemaschinen kaum. Der Wirkungsgrad der Kaffeemaschine wird stark verbessert und die Gefahr einer Verkalkung verringert sich. Nach Ablauf der Betriebsdauer der Kaffeemaschine kann außerdem eine leichte Zerlegung der Durchlaufheizung in ihre Einzelteile erfolgen, wenn im bevorzugten Fall das Heizelement lösbar mit dem Durchflußrohr verbunden ist, so daß die verwendeten Materialien einer Wiederverwertung zugeführt werden können. Letzterer Aspekt gewinnt im Hinblick auf den nötigen Umweltschutz immer mehr Bedeutung.

Andere Einsatzgebiete für die erfindungsgemäße Durchflußheizung können beispielsweise bei Durchlauferhitzern erschlossen werden.

Bei einer besonders zweckmäßigen Ausführungsform wird das Durchflußrohr an seinem gesamten Umfang und entlang seiner gesamten Länge von dem elektrischen Widerstandsheizelement ummantelt. Damit wird eine besonders enge Wärmekopplung zwischen Durchflußrohr und Heizelement erreicht. Diese Ausführung ist besonders einfach und preiswert herstellbar, da gewöhnlicher Widerstandsdraht, Heizfolie oder dergleichen eingesetzt werden kann. Außerdem kann die Heizwicklung an jede beliebige Form des Durchflußrohrs angepaßt werden.

Eine abgewandelte Ausführungsform besitzt ein Heizelement, welches in die Außenwand des Durchflußrohrs formschlüssig integriert ist, beispielsweise indem es in die Wand eingeschmolzen bzw. eingegossen wird.

Eine vorteilhafte Ausführungsform der Durchflußheizung besitzt ein Durchflußrohr aus Glas oder Kunstglas. Dies unterstützt auch den vorbeugenden Gesundheitsschutz, da keine Diffusion schädlicher Bestandteile in das durchströmende Wasser erfolgt, im Vergleich zur bekannten Verwendung von Durchflußrohren aus Aluminium oder dergleichen. Es ist auch besonders zweckmäßig, wenn das Durchflußrohr einen mehrschichtigen Aufbau besitzt, wobei zumindest die innere Schicht gegenüber dem Medium resistent ist, zumindest die äußere Schicht elektrisch isolierend ist und alle Schichten wärmebeständig sind. Besonders vorteilhaft ist es dabei, wenn die innere Schicht eine Antihaftbeschichtung ist. Durch die Verwendung von Glas oder einem anderen Material bzw. einer Materialkombination, welches eine relativ glatte Oberfläche oder anderweitig geeignete Antihafteigenschaften besitzt, wird die Ablagerung von Stoffen an der Wandung des Durchflußrohrs vermieden oder zumindest verringert. Das Durchflußrohr kann bei geeigneter Materialauswahl auch aus Kunststoff hergestellt werden.

Eine zu bevorzugenden Ausführungsform zeichnet sich dadurch aus, daß die Keramikfassung aus zwei Halbschalen besteht, die jeweils eine dem halben Querschnitt des Durchflußrohrs zzgl. der Dicke der Heizwicklung entsprechende Rinne aufweisen, so daß diese Rinne im wesentlichen an der Heizwicklung anliegt und die nach innen gewandten Flächen der Halbschale aufeinander liegen. Durch diese Gestaltung ist eine sehr einfache Montage der Durchflußheizung möglich. Nach dem Umwickeln des Durchflußrohrs mit der Heizwicklung müssen die beiden Halbschalen lediglich auf das umwickelte Durchflußrohr aufgesetzt und mit geeigneten Befestigungsmitteln befestigt werden. Beispielsweise können Spannbänder die beiden Halbschalen zusammenhalten oder diese werden miteinander verklebt. Die Herstellung der Halbschalen ist ebenfalls sehr einfach. Gegebenenfalls können die Materialeigenschaften und/oder die Dicken der beiden Halbschalen unterschiedlich ausgewählt werden, so daß eine Halbschale (die untere) einer bessern Wärmeisolation dient, während die andere Halbschale (die obere) einer besseren Wärmeleitung zu einer angrenzenden Warmhalteplatte dient.

Es kann auch vorteilhaft sein, wenn die Heizwicklung aus mehreren Teilwicklungen besteht. Dadurch können verschiedene Heizleistungen bereitgestellt werden, wobei je nach erforderlicher Heizleistung eine oder mehrere der Teilwicklungen an die Versorgungsspannung angeschaltet werden. Wenn diese Ausführungsform bei einer Kaffeemaschine eingesetzt wird, eröffnet dies die Möglichkeit, die Durchströmgeschwindigkeit des Wassers an die gewünschte Gesamtmenge des zuzubereitenden Kaffees anzupassen, so daß optimale Voraussetzungen für ein bestmögliches Aroma des zuzubereitenden Getränks eingestellt werden können.

Eine abgewandelte Ausführungsform besitzt an der Keramikfassung nach außen gerichtete Anschlußelemente, die mit den Anschlußenden der Heizwicklung bzw. der Teilwicklungen elektrisch verbunden sind. Auf diese Weise dient die Keramikfassung sogleich als mechanischer Träger für die Anschlußelemente, wodurch separate Befestigungspunkte überflüssig werden. Die Durchflußheizung kann auf diese Weise als kompaktes Heizmodul ausgebildet sein, welches bei der Montage in einem Endgerät mit wenigen Handgriffen an die elektrische Versorgung anschließbar ist.

Insbesondere für den Einsatz in einer Kaffeemaschine ist es vorteilhaft, wenn die Keramikfassung und das Durchflußrohr u-förmig gebogen sind, so daß Ein- und Auslauföffnung des Durchflußrohrs in einer Ebene liegen. Sowohl das verwendete Durchflußrohr als auch die Keramikfassung können während der Herstellung ohne weiteres in eine solche Form gebracht werden. Die Formgebung der Durchflußheizung entspricht dann weitgehend den bisher verwendeten Durchflußheizungen, so daß diese bei bestehenden Modellreihen von Kaffeemaschinen ohne weiteres durch die erfindungsgemäße Durchflußheizung ersetzt werden können.

Ebenso ist es insbesondere beim Einsatz der Durchflußheizung in einer Kaffeemaschine zweckmäßig, wenn die Oberseite der Keramikfassung in gutem Wärmekontakt zu der Warmhalteplatte der Kaffeemaschine steht.

Bei einer abgewandelten Ausführungsform ist die obere Halbschale der Keramikfassung unmittelbar als Warmhalteplatte ausgebildet. Aufgrund der elektrisch gut isolierenden Eigenschaften der Keramikfassung besteht nicht die Gefahr, daß der Benutzer einer derartigen Maschine bei der Berührung der freiliegenden Warmhalteplatte mit einer elektrischen Spannung in Berührung kommt, obwohl auf der Innenseite der Keramikfassung unmittelbar die elektrische Heizwicklung anliegt. Natürlich können diese Ausführungsformen der Durchflußheizung auch bei anderen Geräten vorteilhaft eingesetzt werden.

Bei einer abgewandelten Ausführungsform ist es auch möglich, die Keramikfassung weitgehend mit einer Wärmeisolation zu umgeben, um eine Wärmeabgabe an die Umwelt zu verhindern. Dies ist zum Beispiel dann vorteilhaft, wenn die Durchflußheizung für einen Durchlauferhitzer eingesetzt werden soll. Die verwendete Keramik sollte dann so ausgewählt werden, daß Sie bereits selbst einen relativ hohen Wärmewiderstand aufweist.

Es ist weiterhin zweckmäßig, wenn ein Temperatursensor thermisch mit dem Durchflußrohr gekoppelt ist.

Weitere Vorteile, Einzelheiten und Weiterbildungen ergeben sich aus der nachfolgenden Beschreibung bevorzugter Ausführungsformen der Erfindung, unter Bezugnahme auf die Zeichnung. Es zeigen:
- Fig. 1: eine vereinfachte perspektivische Ansicht einer erfindungsgemäßen Durchflußheizung;
- Fig. 2: eine vereinfachte perspektivische Explosionsdarstellung der in Fig. 1 gezeigten Durchflußheizung.

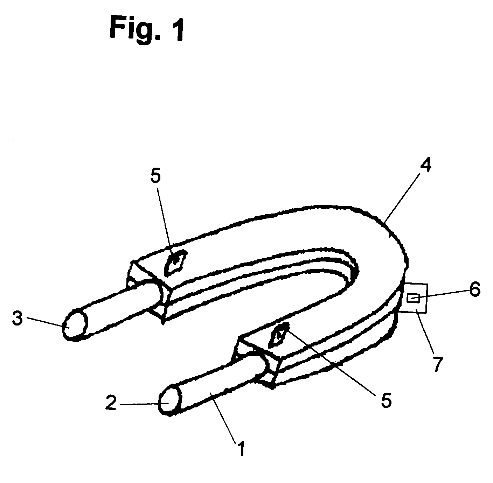

In Fig. 1 ist eine erste Ausführungsform der erfindungsgemäßen Durchflußheizung in einer perspektivischen Ansicht im zusammengebauten Zustand dargestellt. Die Durchflußheizung besitzt ein Durchflußrohr 1 mit einem Einlauf 2 und einem Auslauf 3. Außerdem ist eine Keramikfassung 4 vorgesehen, die den aktiven Bereich des Durchflußrohrs 1 allseitig umkapselt. An der Keramikfassung 4 sind im dargestellten Beispiel zwei Anschlußelemente 5 befestigt, die der Stromzufuhr dienen. Aus der Keramikfassung 4 ragt ein Wärmeleitelement 6, z.B. ein Metallplättchen heraus, welches im Inneren der Keramikfassung thermisch an das Durchflußrohr 1 gekoppelt ist. An dem Wärmeleitelement 6 ist ein Temperatursensor 7 angeordnet, mit dessen Hilfe die Temperatur am Durchflußrohr und darüber die Temperatur des Mediums überwacht werden kann. Das Ausgangssignal des Temperatursensors 7 kann in bekannter Weise zur Regelung der Durchflußheizung verwendet werden.

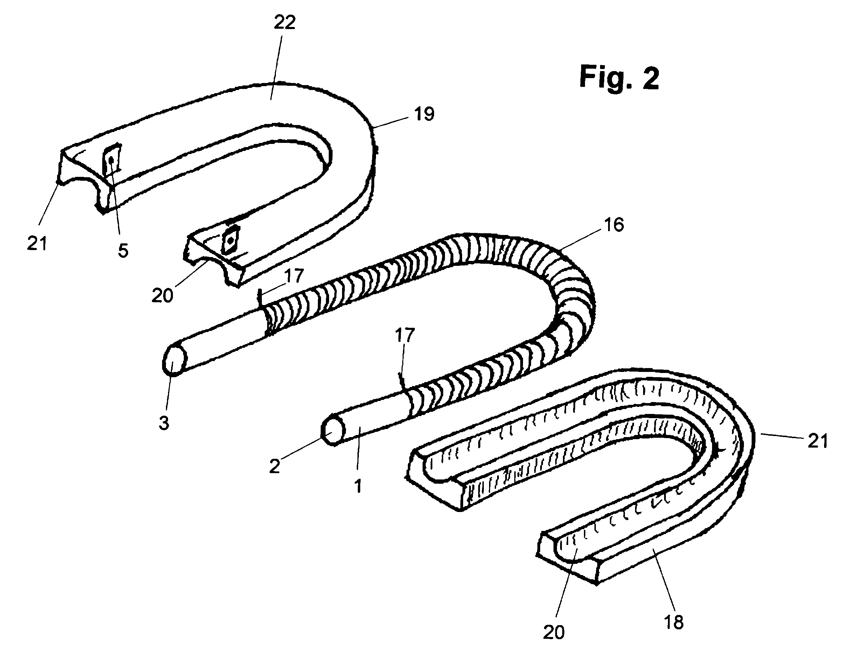

Fig. 2 zeigt in einer perspektivischen Explosionsdarstellung weitere Einzelheiten der in Fig. 1 dargestellten Ausführungsform der Durchflußheizung. Um das Durchflußrohr 1 ist eine Heizwicklung 16 gewickelt, die das eigentliche Heizelement darstellt. Das Durchflußrohr kann beispielsweise aus Glas oder einem geeigneten Kunststoff bestehen. Ebenso können Durchflußrohre mit einem mehrschichtigen Aufbau verwendet werden. Um die Verkalkungsgefahr innerhalb des Durchflußrohrs 1 besonders effektiv zu verhindern, kann das Durchflußrohr an seiner Innenseite eine Antihaftbeschichtung aufweisen.

Die Heizwicklung 16 ist mehr oder weniger eng um das Durchflußrohr 1 gewendelt, wobei auf diese Weise ein ausreichend hoher Wärmeeintrag in das das Durchflußrohr durchströmende Medium, beispielsweise Wasser, erfolgen kann. Die dargestellte Heizwicklung 16 besitzt zwei Anschlußenden 17, die beim Zusammenbau mit den Anschlußelementen 5 elektrisch verbunden werden.

Bei der dargestellten Ausführungsform besteht die Keramikfassung 4 aus einer unteren Halbschale 18 und einer oberen Halbschale 19. Die beiden Halbschalen 18, 19 sind, abgesehen von den ggf. erforderlichen Aussparungen für die Anschlußelemente 5, in ihrer Form identisch, was Vorteile hinsichtlich der Produktion und der dabei entstehenden Kosten mit sich bringt. Jede Halbschale 18, 19 besitzt eine Rinne 20, die in ihren Abmessungen an das Durchflußrohr 1, zuzüglich der Heizwicklung 16 angepaßt ist. Beispielsweise kann das Durchflußrohr bei einer Durchflußheizung für eine Kaffeemaschine einen Durchmesser von ca. 10 mm aufweisen. Die Gesamtdicke jeder Halbschale kann dann etwa 10 mm betragen, so daß die Keramikfassung 4 eine ausreichende Festigkeit besitzt.

Durch die eben ausgebildeten Innenflächen 21 an den beiden Halbschalen ist es möglich, die Halbschalen beim Zusammenbau mit ihren Innenflächen 21 aneinander anliegend zu positionieren und beispielsweise durch Verkleben zu befestigen. Es können aber auch Spannbänder oder Klemmelemente verwendet werden, um die beiden Halbschalen am Durchflußrohr zu positionieren.

Es ist vorteilhaft, wenn die obere Halbschale 19 eine großflächige, ebene Oberseite 22 besitzt, da diese einen guten Wärmekontakt zu einer Warmhalteplatte (nicht gezeigt) ermöglicht. Im Falle des Einsatzes der Durchflußheizung in einer Kaffeemaschine, kann damit die üblicherweise vorhandene Warmhalteplatte beheizt werden. Bei einer abgewandelten Ausführungsform kann die Oberseite 22 so großflächig ausgebildet sein, daß diese Warmhalteplatte direkt durch die Oberseite 22 der oberen Halbschale 19 gebildet wird. Dadurch kann die herkömmliche Warmhalteplatte entfallen.

Es sind vielfältige Abwandlungen der erfindungsgemäßen Durchflußheizung möglich. Beispielsweise kann die Formgebung des Durchflußrohres und der Keramikfassung ohne weiteres an den speziellen Einsatzfall angepaßt werden. Als Material für die Keramikfassung kann z.B. Aluminiumdioxid oder ein anderes geeignetes Keramiksubstrat verwendet werden. Es ist ebenfalls möglich, daß Durchflußrohr mit einem eckigen Querschnitt auszubilden und die Aussparung in der Keramikfassung an diese Form anzupassen.

Für die Herstellung der Heizwicklung kann üblicher Widerstandsdraht verwendet werden. Ebenso ist es möglich, Heizfolie oder Heizbleche am Umfang des Durchflußrohrs als Heizelement anzuordnen.

## Patentansprüche

1. Durchflußheizung zur Erwärmung flüssiger Medien mit einem elektrischen Widerstandsheizelement (16) und einem Durchflußrohr (1), welches vom Medium durchströmt wird und aus einem wärmebeständigen, zumindest an seiner Innenwand gegenüber dem Medium resistenten Material oder einer entsprechenden Materialkombination besteht, dadurch gekennzeichnet, daß das Widerstandsheizelement (16) direkt an der Außenwand des Durchflußrohrs (1) angeordnet ist, welche aus elektrisch isolierendem Material besteht.

2. Durchflußheizung nach Anspruch 1, dadurch gekennzeichnet, daß das Durchflußrohr (1) aus Glas, Kunstglas oder einem anderen Kunststoff besteht.

3. Durchflußheizung nach Anspruch 1 oder 2, dadurch gekennzeichnet, daß das Durchflußrohr (1) einen mehrschichtigen Aufbau besitzt, wobei zumindest die innere Schicht gegenüber dem Medium resistent ist, zumindest die äußere Schicht elektrisch isolierend ist, und alle Schichten wärmebeständig sind.

4. Durchflußheizung nach Anspruch 3, dadurch gekennzeichnet, daß die innere Schicht eine Antihaftbeschichtung ist.

5. Durchflußheizung nach einem der Ansprüche 1 bis 4, dadurch gekennzeichnet, daß das Widerstandsheizelement eine elektrische Heizwicklung (16) ist, die um das Durchflußrohr (1) gewickelt ist.

6. Durchflußheizung nach einem der Ansprüche 1 bis 4, dadurch gekennzeichnet, daß das Widerstandsheizelement eine elektrische Heizwicklung (16) ist, die in die Außenwand des Durchflußrohrs (1) formschlüssig integriert ist.

7. Durchflußheizung nach einem der Ansprüche 1 bis 6, dadurch gekennzeichnet, daß eine an die Form des Durchflußrohrs (1) angepaßte Keramikfassung (4) vorgesehen ist, die das Durchflußrohr und das Widerstandsheizelement (16) umkapselt.

8. Durchflußheizung nach Anspruch 7, dadurch gekennzeichnet, daß die Keramikfassung (4) aus zwei Halbschalen (18, 19) besteht, die jeweils eine dem halben Querschnitt des Durchflußrohrs (1) zuzüglich der Dicke des Widerstandsheizelements (16) entsprechende Rinne (20) aufweisen, so daß diese Rinne im wesentlichen an dem Widerstandsheizelement (16) anliegt und die nach innen gewandten Flächen (21) der Halbschalen (18, 19) aufeinander liegen.

9. Durchflußheizung nach Anspruch 7 oder 8, dadurch gekennzeichnet, daß sie als Heizung für eine Heißgetränkezubereitungsmaschine ausgebildet ist, wobei das zu erhitzende Wasser durch das Durchflußrohr (1) strömt und die Oberseite der Keramikfassung (4) in gutem Wärmekontakt zu einer Warmhalteplatte steht.

10. Durchflußheizung nach Anspruch 9, dadurch gekennzeichnet, daß die obere Halbschale (19) der Keramikfassung (4) selbst die Warmhalteplatte bildet.

11. Heißgetränkezubereitungsmaschine, insbesondere Kaffeemaschine, mit einer Durchflußheizung zur Erwärmung des Wassers und einer Warmhalteplatte für die Wärmezufuhr zu dem Behälter, in dem der zubereitete Kaffee aufbewahrt wird, dadurch gekennzeichnet, daß die Durchflußheizung gemäß einem der Ansprüche 1 bis 10 ausgebildet ist.
